# FASCICULE DE BREVET EUROPEEN

(11) **EP 4 096 890 B1**
(45) Date de publication et mention de la délivrance du brevet: **28.02.2024**
(21) Numéro de dépôt: 21705588.8
(22) Date de dépôt: 19.01.2021
(51) Int. Cl.: B29B 11/16, B29D 99/00, D03D 25/00, F01D 5/28

(54) **PREFORME FIBREUSE TISSEE POUR REALISER UNE PIECE EN MATERIAU COMPOSITE, NOTAMMENT UNE AUBE DE TURBOMACHINE**
GEWEBTER FASERVORFORMLING ZUR HERSTELLUNG EINES TEILS AUS VERBUNDWERKSTOFF, INSBESONDERE EINER TURBOMASCHINENSCHAUFEL
WOVEN FIBROUS PREFORM FOR PRODUCING A PART FROM COMPOSITE MATERIAL, IN PARTICULAR A TURBOMACHINE BLADE

(30) Priorité: 28.01.2020 FR 2000808
(43) Date de publication de la demande: 07.12.2022
(73) Titulaire: SAFRAN, 75015 Paris (FR)
(72) Inventeur: DAMBRINE, Bruno, Jacques, Gérard, 77550 Moissy-Cramayel (FR); MARCHAL, Yann, Didier, Simon, 77550 Moissy-Cramayel (FR); COUPE, Dominique, Marie, Christian, 77550 Moissy-Cramayel (FR); COLOT, Marc-Antoine, 77550 Moissy-Cramayel (FR)
(74) Mandataire: Cabinet Beau de Loménie
(86) Numéro de dépôt international: PCT/FR2021/050096
(87) Numéro de publication internationale: WO 2021/152233

(56) Documents cités:
- EP-A1- 3 181 814
- WO-A1-2019/097147

## Description

### Domaine Technique

La présente invention se rapporte au domaine général des pièces en matériau composite. Plus précisément, l'invention se rapporte à une préforme fibreuse pour former une pièce en matériau composite raidie.

### Technique antérieure

De façon bien connue, une pièce en matériau composite peut être obtenue par réalisation d'une préforme fibreuse et densification de la préforme par une matrice. Selon l'application envisagée, la préforme peut être en fibres de verre, carbone ou céramique, et la matrice peut être en un matériau organique (polymère), en carbone ou en céramique.

Pour les pièces de forme relativement complexe, il est connu de réaliser une structure fibreuse ou ébauche en une seule pièce par tissage tridimensionnel (3D) ou multicouches et de mettre en forme la structure fibreuse pour obtenir une préforme fibreuse ayant une forme voisine de celle de la pièce à fabriquer.

Dans le domaine de la fabrication d'aubes de turbomachine en matériau composite, on cherche toujours à augmenter la tenue mécanique de l'aube tout en réduisant sa masse. S'il est aujourd'hui possible de fabriquer des aubes creuses en matériau composite à partir d'une préforme fibreuse tissée en une seule pièce, leur raideur doit toujours être améliorée, notamment lorsqu'il s'agit d'aubes directrices d'entrée ou de sortie IGV ou OGV).

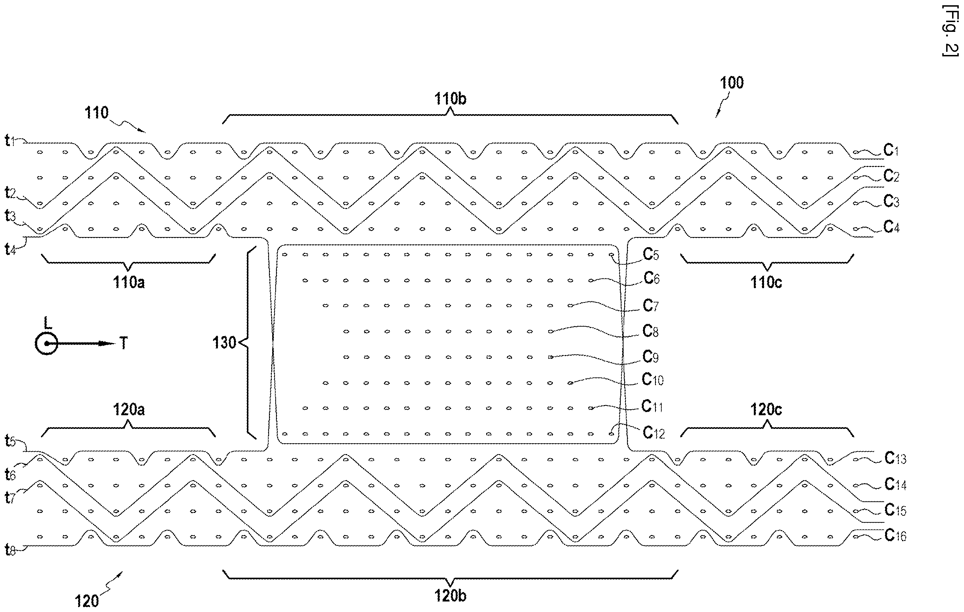

Le document WO 2019/097147 divulgue une préforme fibreuse destinée à former le renfort fibreux d'une pièce en matériau composite à renfort fibreux densifié par une matrice, la préforme fibreuse étant en une seule pièce et obtenue par tissage tridimensionnel d'une première pluralité de fils ou torons s'étendant dans une première direction (L) de la pièce avec une deuxième pluralité de fils ou torons s'étendant dans une deuxième direction (T) de la pièce perpendiculaire à la première direction, la préforme comprenant une première peau, une deuxième peau et une portion de raidissement reliant la première peau à la deuxième peau, la portion de raidissement étant destinée à former un élément de raidissement de la pièce le long de la première ou deuxième direction (figure 2).

Ainsi, il existe toujours un besoin pour une préforme fibreuse en une seule pièce qui permette d'obtenir des pièces en matériau composite conciliant une masse réduite et une raideur améliorée.

### Exposé de l'invention

Selon un aspect de l'invention, ce but est atteint par une préforme fibreuse destinée à former le renfort fibreux d'une pièce en matériau composite à renfort fibreux densifié par une matrice, la préforme fibreuse étant en une seule pièce et obtenue par tissage tridimensionnel d'une première pluralité de fils ou torons s'étendant dans une première direction de la pièce avec une deuxième pluralité de fils ou torons s'étendant dans une deuxième direction de la pièce perpendiculaire à la première direction, la préforme comprenant une première peau, une deuxième peau et une portion de raidissement reliant la première peau à la deuxième peau, la portion de raidissement étant destinée à former un élément de raidissement de la pièce le long de la première ou deuxième direction, caractérisée en ce la préforme présente une partie intermédiaire s'étendant au moins selon la première direction ou deuxième direction entre deux parties d'extrémité, en ce que la portion de raidissement comprend, dans la partie intermédiaire, une pluralité de fils ou torons non tissés s'étendant suivant au moins la première direction ou la deuxième direction qui sont maintenus ensemble par une pluralité de premiers fils ou torons provenant de la première peau et une pluralité de deuxièmes fils ou torons provenant de la deuxième peau, et en ce que, dans les parties d'extrémité, les fils ou torons de la portion de raidissement longitudinale sont tissés avec des fils ou torons.

Par « tissage tridimensionnel », « tissage 3D », « tissage multicouches » on entend ici un mode de tissage par lequel certains au moins des fils de chaîne (ou fils longitudinaux) lient des fils de trame (ou fils transversaux) sur plusieurs couches de trame. Un tel tissage peut être réalisé dans un métier à tisser de type jacquard, de façon connue en soi.

La préforme selon l'invention est remarquable en ce qu'elle présente une portion de raidissement qui présente une raideur améliorée dans au moins une direction. La raideur est conférée par la présente des fils non tissés qui sont maintenus par des fils s'étendant dans une direction perpendiculaire de sorte à rester rectilignes dans la préforme. Les fils non tissés sont en outre tissés aux niveaux des parties d'extrémité, ce qui les maintient tendus dans la préforme. Une telle préforme peut ainsi permettre d'alléger des pièces en matériau composite tout en augmentant leur raideur dans une direction déterminée.

Dans un exemple de réalisation, les premiers fils ou torons peuvent être tissés en surface de la première peau, les deuxièmes fils ou torons sont tissés en surface de la deuxième peau, et, dans chaque plan suivant la deuxième direction de la partie intermédiaire, un premier fil ou toron et un deuxième fil ou toron se croisent deux fois de part et d'autre de la portion de raidissement.

Dans un exemple de réalisation, les premiers fils ou torons et les deuxièmes fils ou torons peuvent être tissés à la fois en surface de la première et de la deuxième peau, et, dans chaque plan suivant la deuxième direction de la partie intermédiaire, un premier fil ou toron et un deuxième fil ou toron peuvent se croiser une fois dans la portion de raidissement.

Dans un exemple de réalisation, au moins une partie des fils ou torons non tissés présents dans la portion de raidissement peuvent présenter un titre supérieur au titre des fils ou torons présents dans la première et la deuxième peau. Cette caractéristique permet d'augmenter la raideur de l'élément de raidissement qui sera formé à partir de la portion de raidissement lorsque la préforme sera densifiée pour former une pièce en matériau composite. Par exemple le titre des fils ou torons dans les peaux peut être inférieur ou égal à 24k, et le titre des fils ou torons non tissés dans la portion de raidissement peut être supérieur ou égal à 96k.

Dans un exemple de réalisation, la première ou la deuxième peau peuvent présenter du côté opposé à la portion de raidissement un tissage bidimensionnel en surface.

Dans un exemple de réalisation, les fils ou torons de la première pluralité de fils ou torons peuvent être des fils ou torons de chaîne et les fils ou torons de la deuxième pluralité de fils ou torons peuvent être des fils ou torons de trame.

Dans un exemple de réalisation, dans un plan transversal d'au moins une partie d'extrémité :
- des fils ou torons de la première peau et de la deuxième peau sont tissés par paires dans la première peau et dans la deuxième peau de part et d'autre de la portion de raidissement,
- les fils ou torons d'au moins une première paire de fils ou torons de la deuxième pluralité de fils ou torons de la première peau sont séparés en deux fils ou torons unitaires au niveau de la portion de raidissement de la première pluralité de fils ou torons, lesdits fils ou torons unitaires étant tissés séparément avec des fils ou torons de la première pluralité de fils ou torons dans ladite portion,
- les fils ou torons d'au moins une deuxième paire de fils ou torons de la deuxième pluralité de fils ou torons de la deuxième peau sont séparés en deux fils ou torons unitaires au niveau de la portion de raidissement, lesdits fils ou torons unitaires étant tissés séparément avec des fils ou torons de la première pluralité de fils ou torons dans ladite portion, et
- au moins un fil ou toron de la première paire et au moins un fil ou toron de la deuxième paire se croisent au moins deux fois dans la portion de raidissement.

Dans les parties d'extrémité, la portion de raidissement peut être ainsi formée à partir de paires de fils ou torons de la deuxième pluralité de fils ou torons qui sont dédoublées (séparées) en fils ou torons unitaires tissés ensuite séparément avec des fils ou torons de la première pluralité de fils ou torons qui sont ajoutés au niveau de la portion de raidissement longitudinale. Par ce mode de tissage à partir de paires dédoublées, la portion de raidissement est ainsi liée par tissage aux peaux, ce qui assure une bonne tenue de l'ensemble. En outre, il n'est pas nécessaire d'insérer des fils ou torons de la deuxième pluralité de fils ou torons supplémentaires pour tisser les fils ou torons de la première pluralité de fils ou torons de la portion de raidissement, ce qui simplifie le tissage de la préforme. Le croisement de fils ou torons de la première pluralité de fils ou torons provenant de la première et de la deuxième peau permet d'assurer la liaison par tissage des peaux avec la portion de raidissement longitudinale, tout en augmentant la tenue mécanique de l'ensemble.

L'invention vise aussi une pièce en matériau composite à renfort fibreux densifié par une matrice comprenant une préforme fibreuse telle que celle présentée ci-dessus en tant que renfort fibreux, la pièce ayant une première paroi et une deuxième paroi formées par la première peau et la deuxième peau de la préforme fibreuse entre lesquelles s'étend un élément de raidissement formé par la portion de raidissement de ladite préforme. L'élément de raidissement permet de reprendre les efforts s'exerçant sur la pièce en augmentant la raideur de celle-ci.

Une telle pièce peut être une barre de renfort pour train d'atterrissage d'avion.

Une telle pièce peut constituer une aube de turbomachine aéronautique, la première paroi et la deuxième paroi correspondant respectivement à une face intrados et à une face extrados de l'aube, les parties d'extrémité de la préforme formant des brides de fixation de l'aube.

L'aube peut en particulier constituer une aube directrice d'entrée ou de sortie de turbomachine aéronautique. L'emploi d'une préforme fibreuse selon l'invention est avantageux pour cette application car une telle aube présente des fonctions structurales pour le moteur, entre un coeur de celui-ci et un carénage externe. L'élément de raidissement augmente la tenue mécanique de l'aube en traction et en compression. L'aube peut ainsi être creuse, et comprendre deux cavités qui s'étendent longitudinalement de part et d'autre de l'élément de raidissement, ce qui permet de réduire sa masse par rapport à une aube pleine.

Dans un exemple de réalisation, l'aube peut comprendre une paire de brides centrale et au moins une paire de brides latérale à au moins une extrémité longitudinale, la paire de brides centrale étant formée à partir d'une déliaison ménagée dans la portion de raidissement de la préforme fibreuse et la paire de brides latérale étant formée par prolongement de la première peau et de la deuxième peau de la préforme fibreuse.

En variante, la paire de brides centrale peut être formée par retissage des fils ou torons de la première pluralité de fils ou torons de la portion de raidissement après séparation des brides de la paire de brides centrales.

### Brève description des dessins

[Fig. 1] La figure 1 montre une pièce en matériau composite selon un mode de réalisation de l'invention.
[Fig. 2] La figure 2 montre un exemple d'armure de tissage selon un plan transversal dans la partie intermédiaire d'une préforme fibreuse selon un mode de réalisation de l'invention.
[Fig. 3] La figure 3 montre une variante de réalisation de l'armure de la figure 2.
[Fig. 4] La figure 4 montre un exemple d'armure de tissage selon un plan transversal dans les parties d'extrémité d'une préforme fibreuse selon un mode de réalisation de l'invention.
[Fig. 5] La figure 5 est une vue très schématique en coupe longitudinale d'une turbomachine aéronautique.
[Fig. 6] La figure 6 est une vue schématique d'une aube directrice de sortie de turbomachine aéronautique selon un mode de réalisation de l'invention.
[Fig. 7] La figure 7 montre une vue en coupe longitudinale de l'aube de la figure 6 au niveau d'une de ses brides de fixation.
[Fig. 8] La figure 8 montre une vue en coupe longitudinale de l'aube de la figure 6 au niveau d'une autre de ses brides de fixation.
[Fig. 9] La figure 9 est une vue schématique d'une aube directrice de sortie de turbomachine aéronautique selon un autre mode de réalisation de l'invention.
[Fig. 10] La figure 10 montre une vue en coupe longitudinale de l'aube de la figure 9 au niveau d'une de ses brides de fixation.
[Fig. 11] La figure 11 montre une vue en coupe longitudinale de l'aube de la figure 9 au niveau d'une autre de ses brides de fixation.

### Description des modes de réalisation

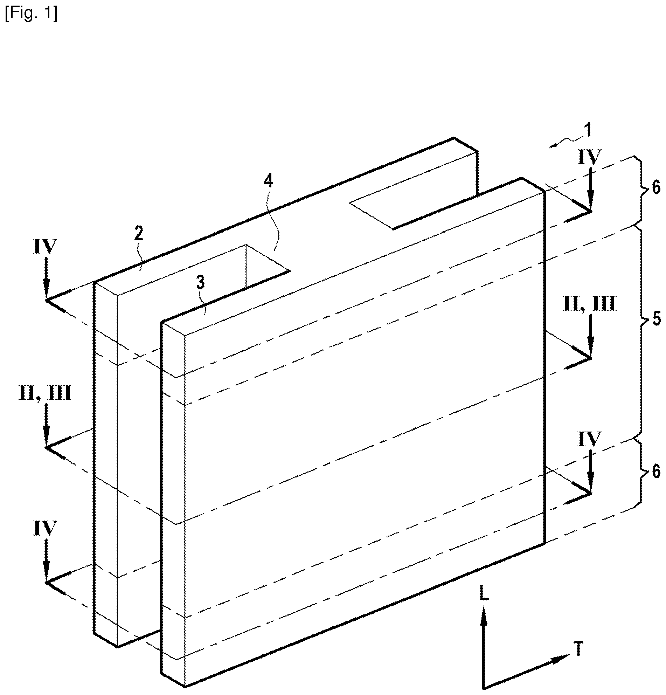

La figure 1 montre un exemple de pièce en matériau composite comprenant un renfort fibreux densifié par une matrice, dont le renfort fibreux peut être obtenu à partir d'une préforme fibreuse selon l'invention. La pièce 1 comprend une première paroi 2, une deuxième paroi 3 et un élément de raidissement 4 s'étendant entre la première paroi 2 et la deuxième paroi 3. L'élément de raidissement 4 prend la forme d'une poutre qui s'étend ici selon une première direction ou direction longitudinale L de la pièce 1 entre les parois 2 et 3. Chaque paroi 2, 3 s'étend selon la direction longitudinale L et selon une deuxième direction ou direction transversale T perpendiculaire à la direction longitudinale L.

Une telle pièce 1 pourra constituer par exemple en adaptant sa forme, une aube de turbomachine ou encore une barre de renfort de train d'atterrissage.

Dans l'exemple décrit ici, la pièce 1 est divisée selon la direction longitudinale et présente une partie intermédiaire 5 qui s'étend entre deux parties d'extrémité 6. Les armures de tissage de la partie intermédiaire 5 et des parties d'extrémité 6 sont différentes et vont être décrites ci-après. Dans un autre mode de réalisation de l'invention, la partie intermédiaire peut être définie suivant la direction transversale.

La figure 2 montre une vue en coupe transversale d'une préforme fibreuse 100 selon un mode de réalisation de l'invention utilisée pour former le renfort fibreux de la pièce de la figure 1.

La préforme 100 est en une seule pièce et obtenue par tissage tridimensionnel. Dans un tissage tridimensionnel, les fils de trame lient entre eux des fils de chaîne appartenant à des couches de fils de chaîne différentes, exception faite de fils de trame qui peuvent être présents en surface pour réaliser un tissage bidimensionnel et de la présence éventuelle de déliaisons locales entre couches de fils de chaîne adjacentes. Différentes armures de tissage 3D ou multi-couches peuvent être utilisées, telles que des armures interlock, multi-satin ou multi-toile, par exemple, comme décrit dans le document WO 2006/136755.

La préforme 100 comprend une première peau 110 destinée à former ici la première paroi 2 de la pièce 1, et une deuxième peau 120 destinée à former ici la deuxième paroi 3 de la pièce 1. La première peau 110 et la deuxième peau 120 sont reliées par une portion de raidissement 130 destinée à former l'élément de raidissement 4 de la pièce 1. Dans l'exemple décrit ici, la portion de raidissement s'étend suivant la direction longitudinale. Dans un autre mode de réalisation de l'invention, la portion de raidissement peut s'étendre suivant la direction transversale.

Sur la figure 2 sont représentées des couches c₁-c₁₆ de fils ou torons de chaîne (longitudinaux) et les trajets de fils ou torons de trame t₁-t₈ (transversaux). Par souci de simplification, on parlera de fils de chaîne et de fils de trame dans la suite de la description. La figure 2 montre ainsi un plan de trame de la préforme fibreuse 100.

La figure 2 montre plus précisément un exemple d'amure de tissage au niveau d'un plan transversal II de la figure 1 situé dans la partie intermédiaire 5 de la pièce 1.

La première peau 110 comprend ici quatre couches de fils de chaîne c₁-c₄, qui sont liées par des fils de trame t₁-t₄. La deuxième peau 120 comprend de manière similaire quatre couches de fils de chaîne c₁₃-c₁₆, qui sont liées par des fils de trame t₅-t₈. La portion de raidissement longitudinale 130 comprend quant à elle huit couches de fils de chaîne c₅-c₁₂. Les fils de trame t₁ à t₈ peuvent être unitaires ou être sous la forme de paires de fils.

La première peau 110 peut être divisée en trois parties 110a, 110b et 110c le long de la direction transversale T. La première partie 110a et la troisième partie 110c constituent des parties libres de la première peau 110 qui sont situées de part et d'autre de la portion centrale 130. De manière similaire, la deuxième peau 120 peut être divisée en trois parties 120a, 120b et 120c le long de la direction transversale T. La première partie 120a et la troisième partie 120c constituent des parties libres de la deuxième peau 120 qui sont situées de part et d'autre de la portion centrale 130.

Le fil de trame t₁ est tissé en surface de la première peau 110 avec un tissage bidimensionnel. Les fils de trame t₂ et t₃ sont tissés dans la première peau 110 avec un tissage tridimensionnel. Le fil de trame t₄ est tissé en surface de la première peau 110 (une surface interne) au niveau des parties 110a et 110c.

De manière symétrique, le fil de trame t₈ est tissé en surface de la deuxième peau 120 avec un tissage bidimensionnel. Les fils de trame t₆ et t₇ sont tissés dans la deuxième peau 120 avec un tissage tridimensionnel. Le fil de trame t₄ est tissé en surface de la deuxième peau 120 (une surface interne) au niveau des parties 120a et 120c.

Dans la partie intermédiaire 5 de la pièce, la portion de raidissement longitudinale 130 est formée par une pluralité de couches de fils de chaîne c₅ à c₁₂ non tissés qui sont maintenus ensemble par les fils de trame t₄ et t₅ provenant respectivement de la première peau 110 et de la deuxième peau 120. Les fils de trame t₄ et t₅ se croisent deux fois de part et d'autre de la portion de raidissement longitudinale 130 de sorte à enserrer les fils de chaîne c₅ à c₁₂ non tissés.

Dans la portion de raidissement longitudinale 130 au niveau de la partie intermédiaire 5 de la pièce, les fils de trame t₄ et t₅ de toutes les couches de trame forment ensemble une sorte de tube dans lequel les fils de chaîne c₅ à c₁₂ sont maintenus rectilignes, conférant sa raideur à la portion de raidissement longitudinale 130.

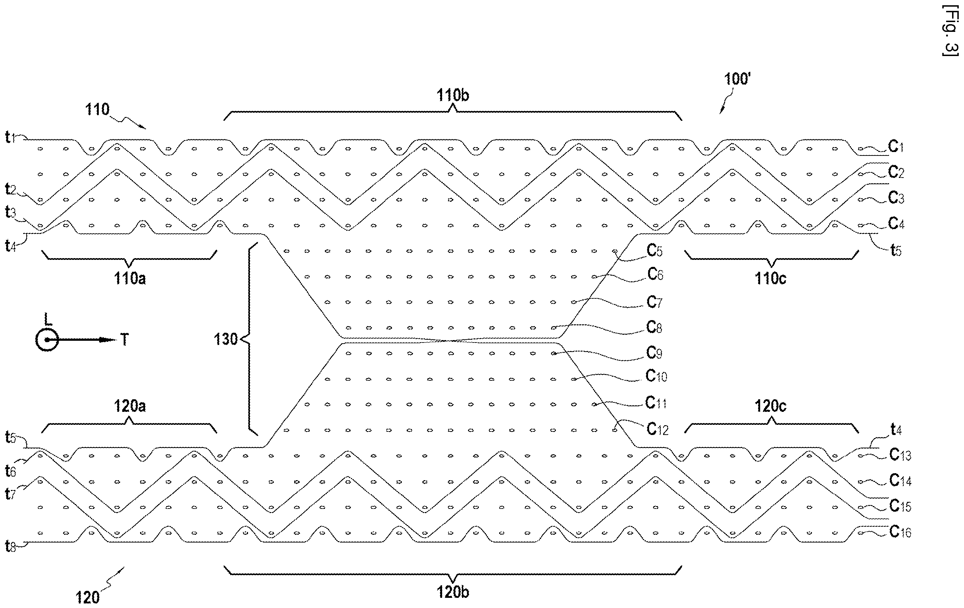

Une variante de réalisation de l'armure de tissage de la figure 2 est représentée sur la figure 3. Dans cette variante, les fils de trame t₄ et t₅ ne se croisent qu'une fois à proximité du centre de la portion de raidissement longitudinale 130, et enserrent les fils de chaîne c₅ à c₁₂ en deux groupes. Le fil de trame t₄ enserre ici les fils de chaîne des couches c₅ à c₈, alors que le fil de trame t₅ enserre les fils de chaîne c₉ à c₁₂. Comme précédemment, les fils de chaîne c₅ à c₁₂ sont maintenus rectilignes par les fils de trame pour conférer à la portion de raidissement longitudinale 130 sa raideur.

Conformément à l'invention, les fils de chaîne c₅ à c₁₂ qui ne sont pas tissés dans la partie intermédiaire 5 sont ensuite tissés dans les parties d'extrémité 6 afin de les conserver rectilignes et tendus. Ils peuvent être tissés dans les parties d'extrémité 6 de façon classique avec des fils de trame, par exemple avec un tissage interlock, ou présenter une armure de tissage particulière telle que celle de la figure 3.

La figure 3 montre un exemple d'armure de tissage particulière dans les parties d'extrémité de la préforme 100, au niveau des plans transversaux IV de la figure 1.

La première peau 110 comprend ici quatre couches de fils de chaîne c₁-c₄, qui sont liées par des fils de trame t₁-t₈. La deuxième peau 120 comprend de manière similaire quatre couches de fils de chaîne c₁₃-c₁₆, qui sont liées par des fils de trame t₉-t₁₆. La portion de raidissement 130 comprend quant à elle huit couches de fils de chaîne c₅-c₁₂ qui correspondent aux fils de chaîne non tissés de la partie intermédiaire 5. On notera qu'il y a, dans la première peau 110 et dans la deuxième peau 120, deux fois plus de fils de trame que de couches de fils de chaîne car les fils de trame sont tissés par paires dans certaines parties des peaux 110 et 120.

Dans la première 110a et dans la troisième partie 110c, les fils de trame sont tissés par paires. Ainsi, par exemple, les fils de trame t₁ et t₂ sont tissés ensemble dans la partie 110a et dans la partie 110c, c'est-à-dire qu'ils suivent le même trajet. En particulier, dans les parties 110a et 110c, le tissage peut être de type interlock. On notera que sur la surface de la première peau 110 opposée à la portion de raidissement 130, et dans les parties 110a et 110c le tissage des fils de trame t₁ et t₂ est bidimensionnel de façon à conférer un état de surface lisse à la pièce en matériau composite.

Dans la première 120a et dans la troisième partie 120c, les fils de trame sont tissés par paires. Ainsi, par exemple, les fils de trame t₁₅ et t₁₆ sont tissés ensemble dans la partie 120a et dans la partie 120c, c'est-à-dire qu'ils suivent le même trajet. En particulier, dans les parties 120a et 120c, le tissage peut être de type interlock. On notera que sur la surface de la deuxième peau 120 opposée à la portion de raidissement 130, et dans les parties 120a et 120c le tissage des fils de trame t₁₅ et t₁₆ est bidimensionnel de façon à conférer un état de surface lisse à la pièce en matériau composite.

Dans l'exemple illustré, les fils de trame de chaque paire de fils de trame t₁-t₂, t₃-t₄, t₅-t₆ et t₇-t₈ sont séparés en deux fils unitaires au niveau de la portion de raidissement 130, et généralement de part et d'autre de celle-ci. Une fois séparés, les fils unitaires sont tissés séparément avec des fils de chaîne dans la partie 110b et dans la portion de raidissement 130. Par « tissés séparément » on entend que les fils ne suivent plus le même trajet. La séparation des paires (ou dédoublement des paires) permet ainsi de doubler le nombre de fils de trame disponibles au niveau de la portion de raidissement pour pouvoir tisser celle-ci avec des couches de fils de chaîne supplémentaires. Ainsi, les fils de trame t₁ à t₄ sont tissés respectivement avec les couches de fils de chaîne c₁ à c₄ dans la partie 110b de la première peau 110, alors que les fils de trame t₅ à t₈ sont tissés respectivement avec les couches de fils de chaîne c₅, c₆, c₈ et c₉ dans la portion de raidissement 130. Une partie des fils de trame unitaires de la première peau 110 sont tissés avec des couches de fils de chaîne de la première peau 110, et une autre partie des fils de trame unitaires de la première peau 110 sont tissés avec des couches de fils de chaîne de la portion de raidissement 130.

Dans l'exemple illustré, les fils de trame de chaque paire de fils de trame t₉-t₁₀, t₁₁ -t₁₂, t₁₃-t₁₄ et t₁₅-t₁₆ sont séparés en deux fils unitaires au niveau de la portion de raidissement 130, et généralement de part et d'autre de celle-ci. Une fois séparés, les fils unitaires sont tissés séparément avec des fils de chaîne dans la partie 120b et dans la portion de raidissement 130. Ainsi, les fils de trame t₁₃ à t₁₆ sont tissés respectivement avec les couches de fils de chaîne c₁₃ à c₁₆ dans la partie 120b deuxième peau 120, alors que les fils de trame t₉ à t₁₂ sont tissés respectivement avec les couches de fils de chaîne c₇, c₁₀ à c₁₂ dans la portion de raidissement 130. Une partie des fils de trame unitaires de la deuxième peau 120 sont tissés avec des couches de fils de chaîne de la deuxième peau 120, et une autre partie des fils de trame unitaires de la deuxième peau 120 sont tissés avec des couches de fils de chaîne de la portion de raidissement 130.

Dans l'exemple illustré, les fils de trame unitaires obtenus par dédoublement des paires de fils de trame sont tissés chacun avec une seule couche de fils de chaîne différente dans les parties 110b et 120b et dans la portion de raidissement 130.

Dans l'exemple illustré, les fils de trame unitaires t₇ et t₅ provenant de la première portion 110 croisent le fil de trame t₉ provenant de la deuxième portion 120 dans la portion de raidissement 130. Ce croisement permet ici que les couches de fils de chaîne c₇, c₈ et c₉ soient liées à la première peau 110 par les fils de trame t₇ et t₈, et à la deuxième peau 120 par le fil de trame t₉. Bien entendu, d'autres armures de tissage peuvent être envisagées en conservant le croisement, au moins deux fois, de fils de trame provenant de la première 110 et de la deuxième 120 peau dans la portion de raidissement 130 afin d'assurer la cohésion de la préforme 100. Ainsi, dans cet exemple, une partie seulement des fils de trame unitaires provenant de la première peau 110 croise une partie seulement des fils de trame unitaires provenant de la deuxième peau 120 ; les autres fils de trame unitaires étant tissés avec des couches de fils de chaîne différentes sans se croiser entre eux.

Dans l'exemple illustré, il y a quatre fils de chaîne par colonne dans la première peau 110 et dans la deuxième peau 120, soit huit fils par colonne au niveau des parties libres 110a, 120a, 110c, 120c des peaux. Le nombre de fils de chaînes d'une même colonne de chaîne est ici progressivement augmenté pour atteindre seize fils de chaîne par colonne dans la préforme au niveau de la portion de raidissement 130. Dans cet exemple, les fils de trame des paires de fils de trame sont séparés au niveau de colonnes de chaîne différentes, c'est-à-dire à des emplacements différents le long de la direction transversale T, cela permet une introduction progressive des nouveaux fils de chaîne et un tissage plus aisé.

Il peut être avantageux que le titre (c'est-à-dire nombre de filaments moyen constituant les fils) des fils de chaîne des couches c₅ à c₁₂ dans la portion de raidissement 130 soit supérieur au titre des fils de chaîne des couches c₁ à c₄ et c₁₃ à c₁₆ dans les peau 110 et 120, afin d'augmenter la fonction de raidissement de la portion de raidissement 130 dans une pièce en matériau composite.

Selon une variante de réalisation de l'invention, la partie intermédiaire de la pièce peut s'étendre suivant la direction transversale. Dans ce cas, la portion de raidissement longitudinale est formée par une pluralité de couches de fils de trame non tissés qui sont maintenus ensemble par les fils de chaîne provenant respectivement de la première peau et de la deuxième peau. Les fils de chaîne peuvent se croiser deux fois de part et d'autre de la portion de raidissement de sorte à enserrer les fils de trame non tissés ou ne se croiser qu'une fois à proximité du centre de la portion de raidissement et enserrer les fils de trame en deux groupes

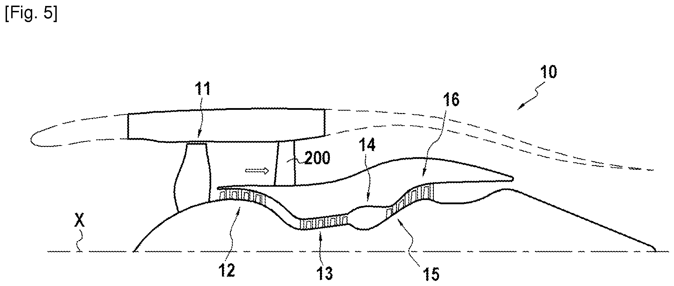

La figure 5 montre une vue schématique en coupe longitudinale d'un turboréacteur à double flux 10 centré sur l'axe X. Il comporte, d'amont en aval : une soufflante 11, un compresseur basse pression 12, un compresseur haute pression 13, une chambre de combustion 14, une turbine haute pression 15, et une turbine basse pression 16. A l'entrée du turboréacteur 10, le flux d'air entrant dans la soufflante 11 est divisé en un flux primaire ou flux chaud, et en un flux secondaire ou flux froid. Le canal d'écoulement du flux secondaire comprend classiquement un redresseur muni d'aubes directrices de sortie 200 (ou « OGV » pour « Outlet Guide Vane ») disposées en aval de la soufflante 11, qui ont notamment pour fonction de redresser le flux froid en sortie de la soufflante 11 pour en tirer le maximum de poussée. Ces aubes 200 ont également une fonction structurale et doivent notamment être capables de supporter des efforts exercés par le moteur en fonctionnement, ou un choc du à l'ingestion d'un objet par la soufflante 11, ou encore le détachement d'une aube de la soufflante 11. Ainsi, ces aubes 200 doivent à la fois présenter des propriétés mécaniques satisfaisantes tout en étant suffisamment légères pour améliorer le rendement propulsif du moteur.

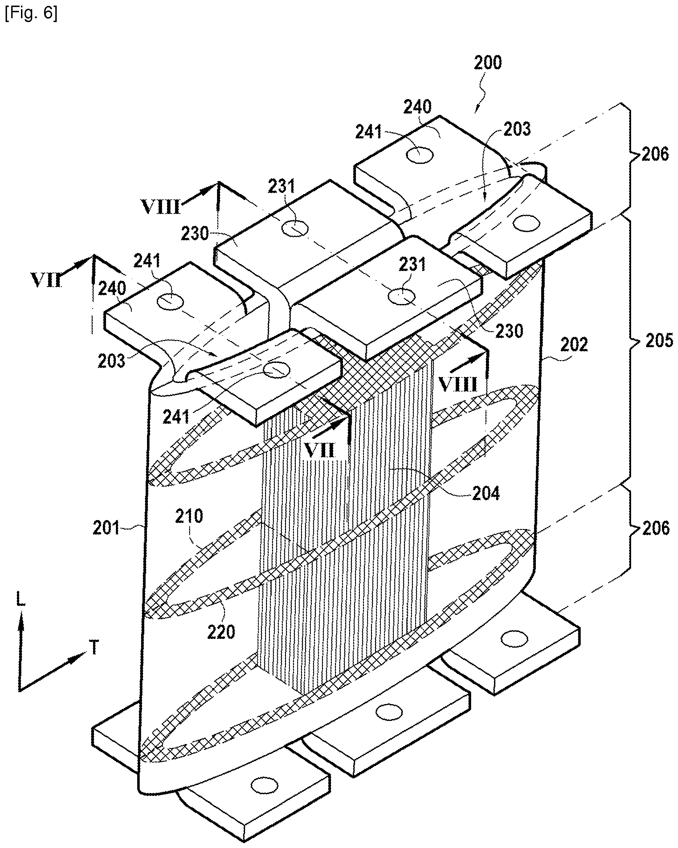

Un exemple d'utilisation d'une préforme 100 selon un mode de réalisation de l'invention pour fabriquer une aube de turbomachine aéronautique en matériau composite, notamment une aube directrice de sortie 200, va à présent être décrit en lien avec les figures 6 à 8.

La figure 6 montre de façon très schématique une aube directrice de sortie 200 d'une turbomachine aéronautique. L'aube 200 s'étend selon la direction longitudinale L, et selon la direction transversale T entre un bord d'attaque 201 et un bord de fuite 202. Elle présente en outre une face intrados 210 et une face extrados 220. A chacune de ses extrémités longitudinales, l'aube 200 présente une paire de brides centrale 230 et deux paires de brides latérales 240 qui permettent sa fixation dans le moteur par le biais de trous de fixation 231, 241. L'aube 200 est creuse et comprend deux cavités longitudinales 203 débouchant à chaque extrémité longitudinale de l'aube 200. Les cavités longitudinales sont séparées par un élément de raidissement 204 qui s'étend entre les faces intrados 210 et extrados 220 le long de la direction longitudinale L.

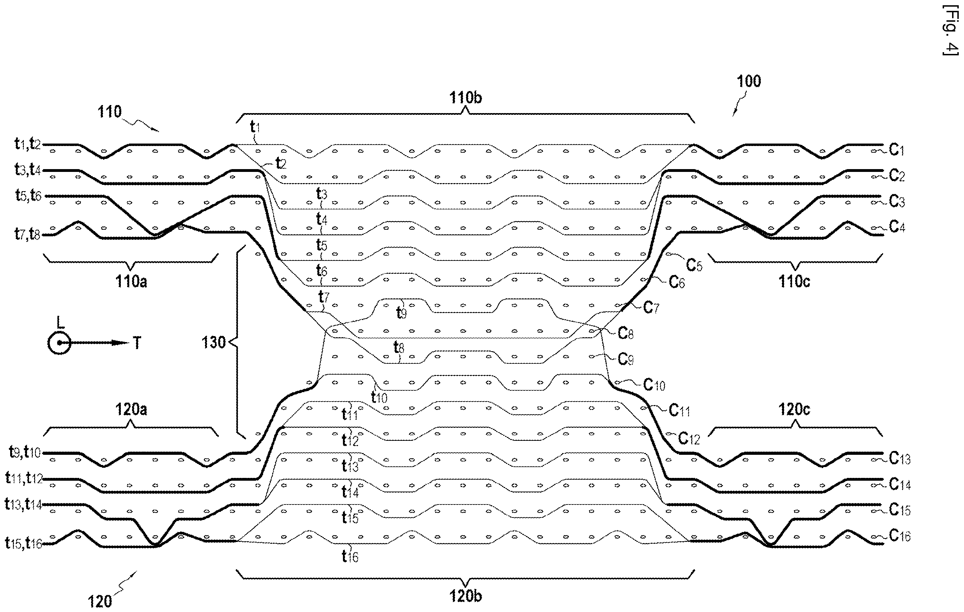

L'aube 200 est en matériau composite à renfort fibreux densifié par une matrice. Le renfort fibreux de l'aube 200 (visible par transparence dans l'aube 200 de la figure 4) est ici obtenu à partir d'une préforme fibreuse 100 telle que celle illustrée sur les figures 2 à 4. En particulier, la première 110 et la deuxième 120 peaux de la préforme fibreuse 100 forment les faces intrados 210 et extrados 220 de l'aube 200, et la portion de raidissement longitudinale 130 de la préforme 100 forme l'élément de raidissement 204. Les peaux 110 et 120 de la préforme fibreuse 100 sont jointes à leurs extrémités libres afin de former les bords 201 et 202 de l'aube 200.

Le renfort fibreux de l'aube 200 est, comme pour la préforme 100, divisé longitudinalement entre une partie intermédiaire 205 dans laquelle les fils de chaîne de l'élément de raidissement 204 ne sont pas tissés, et deux parties d'extrémité 206 dans lesquelles les fils de chaîne de l'élément de raidissement 204 sont tissés avec des fils de trame. L'armure de tissage dans un plan transversal de la partie intermédiaire 205 peut être comme celle de la figure 2 ou 3. L'armure de tissage dans un plan transversal d'une partie d'extrémité 206 dans le corps de l'aube peut être comme celle de la figure 4.

La partie intermédiaire 205 s'étend sur une partie seulement de la hauteur du corps de l'aube 200, et les parties d'extrémité 206 s'étendent à partir de la portion intermédiaire 205 et se prolongent au-delà du corps de l'aube 200 pour former les paires de brides 230 et 240.

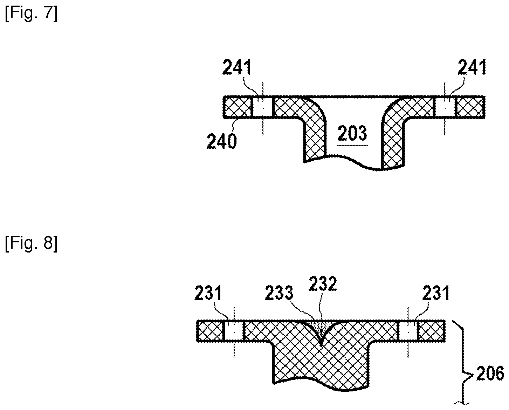

La figure 7 montre une vue en coupe longitudinale du renfort fibreux de l'aube 200 au niveau d'une paire de brides latérale 240. On peut voir que le renfort fibreux est continu entre les faces intrados et extrados, et les extrémités des brides de la paire de brides 240. La paire de brides latérales 240 est en effet obtenue par prolongement des première 110 et deuxième 120 peaux de la préforme fibreuse 100 et dépliage de celles-ci au-delà de l'extrémité du corps de l'aube 200.

La figure 8 montre une vue en coupe longitudinale du renfort fibreux de l'aube 200 au niveau de la paire de brides centrale 230. On peut voir que le renfort fibreux est continu entre l'élément de raidissement 204 et les extrémités des brides de la paire de brides centrale 230. La paire de brides centrale 230 est en effet obtenu à partir d'une déliaison 232 ménagée dans la préforme fibreuse 100 au cours de son tissage. Pour obtenir une telle déliaison, on a omis volontairement de tisser entre elles des couches de fils longitudinaux par des fils transversaux de façon à pouvoir déplier la préforme. Afin de combler l'espace créé par le dépliage des portions déliées de la préforme fibreuse, un insert 233 peut être placé au niveau de la déliaison 232.

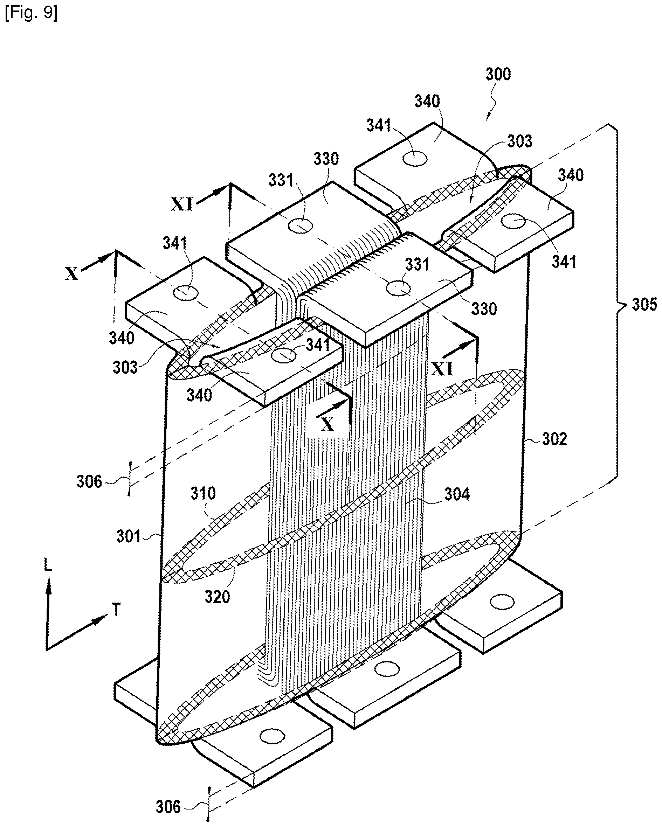

Les figures 9 à 11 montrent une variante d'aube 300. Les signes de référence correspondant entre l'aube 200 et l'aube 300 désignent des caractéristiques identiques (200 devient 300).

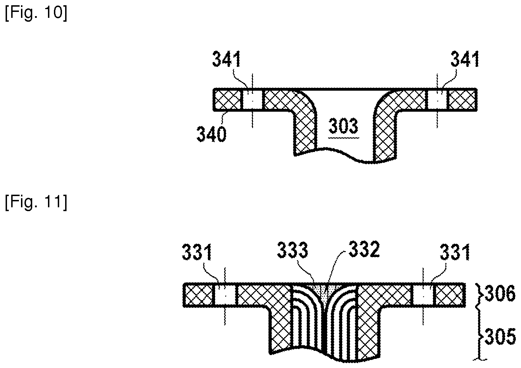

Dans cette variante, le renfort fibreux de l'aube 300 est différent de la précédente en ce que la partie intermédiaire 305 s'étend sur toute la hauteur du corps de l'aube 300, et que les parties d'extrémité 306 forment uniquement les brides 330 et 340. En particulier, les fils de chaîne de l'élément de raidissement longitudinal 204 ne sont de nouveau tissés avec des fils de trame qu'au niveau de la bride centrale 330 en se séparant en deux (figure 11).

De manière générale, les fibres de la préforme fibreuse 100 sont en un matériau choisi en fonction de l'application envisagée, par exemple en verre, en carbone ou en céramique.

La densification de la préforme fibreuse par une matrice pour obtenir une pièce en matériau composite est réalisée en maintenant la préforme dans un outillage de conformation au moins jusqu'à rigidification (ou consolidation) de la préforme. En particulier, des vessies gonflables peuvent être utilisées pour former les parties creuses 203 ou 303 de l'aube 200 ou 300.

La matrice est de nature choisie en fonction de l'application envisagée, par exemple une matrice organique obtenue notamment à partir d'une résine précurseur de matrice polymère telle qu'une résine époxyde, bismaléimide ou polyimide, ou une matrice en carbone ou une matrice en céramique.

Dans le cas d'une matrice organique, la préforme fibreuse est imprégnée par une composition contenant la résine précurseur de matrice, avant conformation dans un outillage, ou après conformation, l'imprégnation étant dans ce dernier cas réalisée par exemple par infusion ou un procédé de type RTM (« Resin Transfer Molding ») dans un moule adapté. Dans le cas d'une matrice en carbone ou en céramique, la densification pourra être réalisée par infiltration chimique en phase gazeuse, ou CVI (« Chemical Vapour Infiltration ») ou par imprégnation par une composition liquide contenant une résine précurseur de carbone ou de céramique et traitement thermique de pyrolyse ou céramisation du précurseur, ces procédés étant bien connus en soi.

## Revendications

1. Préforme fibreuse (100) destinée à former le renfort fibreux d'une pièce (1) en matériau composite à renfort fibreux densifié par une matrice, la préforme fibreuse étant en une seule pièce et obtenue par tissage tridimensionnel d'une première pluralité de fils ou torons (c₁-c₁₆) s'étendant dans une première direction (L) de la pièce avec une deuxième pluralité de fils ou torons (t₁-t₁₆) s'étendant dans une deuxième direction (T) de la pièce perpendiculaire à la première direction, la préforme comprenant une première peau (110), une deuxième peau (120) et une portion de raidissement (130) reliant la première peau à la deuxième peau, la portion de raidissement étant destinée à former un élément de raidissement (4) de la pièce le long de la première ou deuxième direction,
**caractérisée** en ce la préforme présente une partie intermédiaire (5) s'étendant au moins selon la première direction ou deuxième direction entre deux parties d'extrémité (6), en ce que la portion de raidissement (130) comprend, dans la partie intermédiaire, une pluralité de fils ou torons (c₅-c₁₂) non tissés s'étendant suivant au moins la première direction ou la deuxième direction et qui sont maintenus ensemble par une pluralité de premiers fils ou torons (t₄) provenant de la première peau (110) et une pluralité de deuxièmes fils ou torons (t₅) provenant de la deuxième peau (120), et en ce que, dans les parties d'extrémité, les fils ou torons de la portion de raidissement sont tissés avec des fils ou torons.

2. Préforme fibreuse selon la revendication 1, dans laquelle les premiers fils ou torons (t₄) sont tissés en surface de la première peau (110), les deuxièmes fils ou torons (t₅) sont tissés en surface de la deuxième peau (120), et, dans chaque plan suivant la deuxième direction de la partie intermédiaire, un premier fil ou toron (t₄) et un deuxième fil ou toron (t₅) se croisent deux fois de part et d'autre de la portion de raidissement (130).

3. Préforme fibreuse selon la revendication 1, dans laquelle les premiers fils ou torons (t₄) et les deuxièmes fils ou torons (t₅) sont tissés à la fois en surface de la première (110) et de la deuxième peau (120), et, dans chaque plan suivant la deuxième direction de la partie intermédiaire, un premier fil ou toron (t₄) et un deuxième fil ou toron (t₅) se croisent une fois dans la portion de raidissement.

4. Préforme fibreuse selon l'une quelconque des revendications 1 à 3, dans laquelle au moins une partie des fils ou torons non tissés (c₅-c₁₂) présents dans la portion de raidissement présentent un titre supérieur au titre des fils ou torons (c₁-c₄, c₁₃-c₁₆) de la première pluralité de fils ou torons présents dans la première (110) et la deuxième (120) peau.

5. Préforme fibreuse selon l'une quelconque des revendications 1 à 4, dans laquelle la première (110) ou la deuxième peau (120) présente du côté opposé à la portion de raidissement (130) un tissage bidimensionnel en surface.

6. Préforme fibreuse selon l'une quelconque des revendications 1 à 5, dans laquelle les fils ou torons (c₁-c₁₆)de la première pluralité de fils ou torons sont des fils ou torons de chaîne et les fils ou torons (t₁-t₁₆) de la deuxième pluralité de fils ou torons sont des fils ou torons de trame.

7. Pièce (1) en matériau composite à renfort fibreux densifié par une matrice comprenant une préforme fibreuse selon l'une quelconque des revendications 1 à 6 en tant que renfort fibreux, la pièce ayant une première paroi (2) et une deuxième paroi (3) formées par la première peau (110) et la deuxième peau (120) de la préforme fibreuse (100) entre lesquelles s'étend un élément de raidissement (4) formé par la portion de raidissement (130) de ladite préforme.

8. Pièce selon la revendication 7, constituant une aube de turbomachine aéronautique (200 ; 300), la première paroi et la deuxième paroi correspondant respectivement à une face intrados (210 ; 310) et à une face extrados (220 ; 320) de l'aube, les parties d'extrémité (206 ; 306) de la préforme formant des brides de fixation (230, 240 ; 330, 340) de l'aube.

## Patentansprüche

1. Faservorform (100), die dazu bestimmt ist, die Faserverstärkung eines Teils (1) aus Verbundmaterial mit Faserverstärkung zu bilden, das durch eine Matrix verdichtet ist, wobei die Faservorform aus einem einzigen Stück besteht und durch dreidimensionale Verwebung einer ersten Vielzahl von Fäden oder Litzen (c₁-c₁₆), die sich in einer ersten Richtung (L) des Teils erstrecken, mit einer zweiten Vielzahl von Fäden oder Litzen (t₁-t₁₆) erhalten wird, die sich in einer zweiten Richtung (T) des Teils erstrecken, die senkrecht auf die erste Richtung steht, wobei die Vorform eine erste Haut (110), eine zweite Haut (120) und einen Versteifungsabschnitt (130) umfasst, der die erste Haut mit der zweiten Haut verbindet, wobei der Versteifungsabschnitt dazu bestimmt ist, ein Versteifungselement (4) des Teils entlang der ersten oder zweiten Richtung zu bilden,
**dadurch gekennzeichnet, dass** die Vorform einen Zwischenteil (5) aufweist, der sich zumindest entlang der ersten Richtung oder der zweiten Richtung zwischen zwei Endteilen (6) erstreckt, dass der Versteifungsabschnitt (130) in dem Zwischenteil eine Vielzahl von nicht verwebten Fäden oder Litzen (c₅-c₁₂) umfasst, die sich zumindest der ersten Richtung oder der zweiten Richtung folgend erstrecken und die durch eine Vielzahl von ersten Fäden oder Litzen (t₄), die von der ersten Haut (110) kommen, und eine Vielzahl von zweiten Fäden oder Litzen (t₅), die von der zweiten Haut (120) kommen, zusammengehalten werden, und dass in den Endteilen die Fäden oder Litzen des Versteifungsabschnitts mit den Fäden oder Litzen verwebt sind.

2. Faservorform nach Anspruch 1, wobei die ersten Fäden oder Litzen (t₄) an der Oberfläche der ersten Haut (110) verwebt sind, die zweiten Fäden oder Litzen (t₅) an der Oberfläche der zweiten Haut (120) verwebt sind, und in jeder Ebene, die der zweiten Richtung des Zwischenteils folgt, ein erster Faden oder eine erste Litze (t₄) und ein zweiter Faden oder eine zweite Litze (t₅) sich zweimal, nämlich auf der einen und der anderen Seite des Versteifungsabschnitts (130), kreuzen.

3. Faservorform nach Anspruch 1, wobei die ersten Fäden oder Litzen (t₄) und die zweiten Fäden oder Litzen (t₅) jeweils an der Oberfläche der ersten (110) und der zweiten Haut (120) verwebt sind, und in jeder Ebene, die der zweiten Richtung des Zwischenteils folgt, sich ein erster Faden oder eine erste Litze (t₄) und ein zweiter Faden oder eine zweite Litze (t₅) einmal in dem Versteifungsabschnitt kreuzen.

4. Faservorform nach einem der Ansprüche 1 bis 3, wobei zumindest ein Teil der nicht verwebten Fäden oder Litzen (c₅-c₁₂), die in dem Versteifungsabschnitt vorhanden sind, einen höheren Titer aufweist als der Titer der Fäden oder Litzen (c₁-c₄, c₁₃-c₁₆) der ersten Vielzahl von Fäden oder Litzen, die in der ersten (110) und der zweiten (120) Haut vorhanden sind.

5. Faservorform nach einem der Ansprüche 1 bis 4, wobei die erste (110) oder die zweite Haut (120) auf der Seite, die dem Versteifungsabschnitt (130) entgegengesetzt ist, eine zweidimensionale Verwebung an der Oberfläche aufweist.

6. Faservorform nach einem der Ansprüche 1 bis 5, wobei die Fäden oder Litzen (c₁-c₁₆)der ersten Vielzahl von Fäden oder Litzen Kettfäden oder -litzen sind, und die Fäden oder Litzen (t₁-t₁₆) der zweiten Vielzahl von Fäden oder Litzen Schussfäden oder -litzen sind.

7. Teil (1) aus Verbundmaterial mit Faserverstärkung, das durch eine Matrix verdichtet ist, umfassend eine Faservorform nach einem der Ansprüche 1 bis 6 als Faserverstärkung, wobei das Teil eine erste Wand (2) und eine zweite Wand (3) aufweist, die durch die erste Haut (110) und die zweite Haut (120) der Faservorform (100) gebildet werden, zwischen welchen sich ein Versteifungselement (4) erstreckt, das durch den Versteifungsabschnitt (130) der Vorform gebildet wird.

8. Teil nach Anspruch 7, das eine Turbomaschinenschaufel (200; 300) für ein Flugzeug bildet, wobei die erste Wand und die zweite Wand jeweils einer inneren Wölbungsseite (210; 310) und einer äußeren Wölbungsseite (220; 320) der Schaufel entsprechen, wobei die Endteile (206; 306) der Vorform Befestigungsflansche (230, 240; 330, 340) der Schaufel bilden.

## Claims

1. A fibrous preform (100) intended for forming the fibrous reinforcement of a composite material part (1) with fibrous reinforcement densified by a matrix, the fibrous preform being made as a single piece and obtained by three-dimensional weaving of a first plurality of threads or strands (c₁-c₁₆) extending in a first direction (L) of the part with a second plurality of threads or strands (t₁-t₁₆) extending in a second direction (T) of the part perpendicular to the first direction, the preform comprising a first skin (110), a second skin (120) and a stiffening portion (130) connecting the first skin to the second skin, the stiffening portion being intended to form a stiffening element (4) of the part in the first or second direction, **characterised in that** the preform has an intermediate portion (5) extending at least in the first direction or second direction between two end portions (6), **in that** the stiffening portion (130) comprises, in the intermediate portion, a plurality of non-woven threads or strands (c₅-c₁₂) extending in at least the first direction or the second direction and which are held together by a plurality of first threads or strands (t₄) coming from the first skin (110) and a plurality of second threads or strands (t₅) coming from the second skin (120), and **in that**, in the end portions, the threads or strands of the stiffening portion are woven with threads or strands.

2. The fibrous preform according to claim 1, wherein the first threads or strands (t₄) are woven at the surface of the first skin (110), the second threads or strands (t₅) are woven at the surface of the second skin (120), and, in each plane in the second direction of the intermediate portion, a first thread or strand (t₄) and a second thread or strand (t₅) cross twice on either side of the stiffening portion (130).

3. The fibrous preform according to claim 1, wherein the first threads or strands (t₄) and the second threads or strands (t₅) can be woven both at the surface of the first (110) and second (120) skin, and, in each plane in the second direction of the intermediate portion, a first thread or strand (t₄) and a second thread or strand (t₅) cross once in the stiffening portion.

4. The fibrous preform according to any one of claims 1 to 3, wherein at least some of the non-woven threads or strands (c₅-c₁₂) present in the stiffening portion have a titre greater than the titre of the threads or strands (c₁-c₄, c₁₃-c₁₆) of the first plurality of threads or strands present in the first (110) and second (120) skin.

5. The fibrous preform according to any one of claims 1 to 4, wherein the first (110) or second (120) skin have, on the opposite side to the stiffening portion (130), a two-dimensional weaving at the surface.

6. The fibrous preform according to any one of claims 1 to 5, wherein the threads or strands (c₁-c₁₆) of the first plurality of threads or strands are warp threads or strands and the threads or strands (t₁-t₁₆) of the second plurality of threads or strands are weft threads or strands.

7. A part (1) made of composite material with fibrous reinforcement densified by a matrix comprising a fibrous preform according to any one of claims 1 to 6 as fibrous reinforcement, the part having a first wall (2) and a second wall (3) formed by the first skin (110) and the second skin (120) of the fibrous preform (100) between which extends a stiffening element (4) formed by the stiffening portion (130) of said preform.

8. The part according to claim 7, forming an aeronautical turbomachine blade (200; 300), the first wall and the second wall corresponding respectively to a pressure face (210; 310) and to a suction face (220; 320) of the blade, the end portions (206; 306) of the preform forming fastening flanges (230, 240; 330, 340) of the blade.
